# EUROPÄISCHE PATENTANMELDUNG

(11) **EP 4 467 403 A1**
(43) Veröffentlichungstag der Anmeldung: **27.11.2024**
(21) Anmeldenummer: 24176085.9
(22) Anmeldetag: 15.05.2024
(51) Int. Cl.: B60S 3/06, F21S 4/28, F21V 33/00

(54) **RADLEITSCHIENE, FAHRZEUGWASCHVORRICHTUNG MIT EINER RADLEITSCHIENE UND VERFAHREN ZUM HERSTELLEN EINER RADLEITSCHIENE**

(30) Priorität: 26.05.2023 DE 102023114010
(71) Anmelder: Alfred Kärcher SE & Co. KG, 71364 Winnenden (DE)
(72) Erfinder: Haberl, Bernd, 71364 Winnenden (DE)
(74) Vertreter: DTS Patent- und Rechtsanwälte PartmbB

(57) **Zusammenfassung**

Die vorliegende Erfindung betrifft eine Radleitschiene (118) für eine von einem Kraftfahrzeug (106) befahrbare Stellfläche (114), insbesondere einer Fahrzeugwaschvorrichtung (100), wobei die Radleitschiene (118) mindestens einen eine Längserstreckung aufweisenden Aufnahmekörper (122) und eine eine Längserstreckung aufweisende und am mindestens einen Aufnahmekörper (122) angeordnete Leuchteinrichtung (156) mit einer Mehrzahl von Leuchtelementen (158) umfasst, wobei der mindestens eine Aufnahmekörper (122) ein erstes Aufnahmekörperteil (124) und ein zweites Aufnahmekörperteil (126) umfasst, die zwischen sich einen Aufnahmeraum (154) bilden, in dem die Leuchteinrichtung (156) aufgenommen ist, vorzugsweise verbunden mit mindestens einem der Aufnahmekörperteile (124, 126), wobei das erste Aufnahmekörperteil (124) und/oder das zweite Aufnahmekörperteil (126) entlang der Längserstreckung zumindest abschnittsweise aus einem transparenten milchigen Material gefertigt ist. Außerdem betrifft die Erfindung eine Fahrzeugwaschvorrichtung (100) und ein Verfahren zum Herstellen einer Radleitschiene (118).

## Beschreibung

Die vorliegende Erfindung betrifft eine Radleitschiene für eine von einem Kraftfahrzeug befahrbare Stellfläche, insbesondere einer Fahrzeugwaschvorrichtung, wobei die Radleitschiene mindestens einen eine Längserstreckung aufweisenden Aufnahmekörper und eine eine Längserstreckung aufweisende und am mindestens einen Aufnahmekörper angeordnete Leuchteinrichtung mit einer Mehrzahl von Leuchtelementen umfasst.

Außerdem betrifft die vorliegende Erfindung eine Fahrzeugwaschvorrichtung mit mindestens einer Radleitschiene, wobei die Fahrzeugwaschvorrichtung insbesondere eine Fahrzeugwaschanlage ist.

Ferner betrifft die vorliegende Erfindung ein Verfahren zum Herstellen einer Radleitschiene.

Eine Radleitschiene der eingangs genannten Art kommt bei einer Fahrzeugwaschvorrichtung zur seitlichen Begrenzung einer Stellfläche zum Einsatz. Beispielsweise ist bei einer Fahrzeugwaschvorrichtung in Gestalt einer Fahrzeugwaschanlage sicherzustellen, dass das Fahrzeug zwischen in Querrichtung voneinander beabstandeten Radleitschienen positioniert ist, um zu gewährleisten, dass ein Waschportal der Fahrzeugwaschanlage beim Verfahren nicht mit dem Fahrzeug kollidiert und dieses beschädigt. Die Leuchteinrichtung mit den Leuchtelementen erleichtert es dem Benutzer, die Radleitschiene und damit die seitliche Begrenzung der Stellfläche zu erkennen, wodurch dem Benutzer die Positionierung des Fahrzeugs erleichtert wird. Bekannt ist es auch, dem Benutzer über die Leuchtelemente optisch Informationen zukommen zu lassen, beispielsweise, dass das Fahrzeug richtig positioniert ist und/oder dass weiter einzufahren ist bzw. zurückzusetzen ist.

In der DE 20 2012 103 410 U1 ist eine gattungsgemäße Radleitschiene beschrieben. Eine Mehrzahl von in einer Reihe angeordneten Leuchtelementen ist gemeinsam auf einem länglichen Träger angeordnet, der beispielsweise in eine Aufnahme eines Aufnahmekörpers aus einem Blechteil eingeschoben ist. Das von den Leuchtelementen emittierte Licht ist nur nach oben in Richtung auf den Raum oberhalb der Stellfläche gerichtet. Bei einer Ausführungsform wird das Licht durch eine verhältnismäßig schmale Öffnung des Aufnahmekörpers hindurch emittiert, was den Sichtbarkeitsbereich erheblich einschränkt. Darüber hinaus weist die Radleitschiene eine verhältnismäßig komplizierte Bauform auf, was zu beträchtlichen Herstellungskosten führt.

Die WO 2017/060435 A1 beschreibt eine Radleitschiene mit in Öffnungen eingesetzten und voneinander getrennten Leuchtkörpern. Dabei ist jeweils ein Montagesockel vorgesehen, der in einem Rand der Öffnung angeordnet ist. Der Rand greift in eine korrespondierende Nut am Montagesockel ein. Zweierlei Dichtelemente sind vorzusehen, um den Montagesockel auf einer dem Fahrzeug zugewandten und einer dem Fahrzeug abgewandten Seite abzudichten. Die in der WO 2017/060435 A1 beschriebene Konstruktion ist herstellungstechnisch aufwendig und wartungsunfreundlich.

Eine weitere Radleitschiene mit an Öffnungen angeordneten separaten Leuchtkörpern ist in der DE 10 2018 117 808 A1 beschrieben. Diese Radleitschiene bewährt sich in der Praxis und ist insbesondere im Hinblick auf die Herstellung und die Wartung erheblich vorteilhafter als die in der WO 2017/060435 A1 beschriebene Radleitschiene ausgestaltet.

Aufgabe der vorliegenden Erfindung ist es, eine Radleitschiene der eingangs genannten Art bereitzustellen, die eine konstruktiv einfache Ausgestaltung aufweist. Darüber hinaus ist es Aufgabe der vorliegenden Aufgabe, eine Fahrzeugwaschvorrichtung mit einer derartigen Radleitschiene und ein Verfahren zum Herstellen einer derartigen Radleitschiene bereitzustellen.

Diese Aufgabe wird bei einer gattungsgemäßen Radleitschiene erfindungsgemäß dadurch gelöst, dass der mindestens eine Aufnahmekörper ein erstes Aufnahmekörperteil und ein zweites Aufnahmekörperteil umfasst, die zwischen sich einen Aufnahmeraum bilden, in dem die Leuchteinrichtung aufgenommen ist, vorzugsweise verbunden mit mindestens einem der Aufnahmekörperteile, wobei das erste Aufnahmekörperteil und/oder das zweite Aufnahmekörperteil entlang der Längserstreckung zumindest abschnittsweise aus einem transparenten milchigen Material gefertigt ist.

Bei der erfindungsgemäßen Radleitschiene sind zwei Aufnahmekörperteile vorgesehen, die bei der Montage aneinander angeordnet und insbesondere aneinandergefügt werden können, so dass zwischen ihnen der Aufnahmeraum definiert ist. Im Aufnahmeraum ist die Leuchteinrichtung aufgenommen, die beispielsweise zunächst an einem der Aufnahmekörperteile angeordnet und vorzugsweise mit diesem verbunden wird, bevor die Aufnahmekörperteile aneinander angeordnet werden. Dies ermöglicht eine konstruktiv einfache und kostengünstige Herstellung der Radleitschiene. Mindestens eines der Aufnahmekörperteile ist abschnittsweise aus einem transparenten, milchigen Material gefertigt. Dies gibt die Möglichkeit, dass das von den Leuchtelementen emittierte Licht im entsprechenden Aufnahmekörperteil gestreut wird und sich dadurch in viele Richtungen ausbreiten kann.

Vorzugsweise kann dadurch der Eindruck erweckt werden, dass der Aufnahmekörper selbstleuchtend ist, obwohl Licht nur punktuell von den Leuchtelementen emittiert wird. Durch die transparente milchige Ausgestaltung mindestens eines Aufnahmekörperteils kann insbesondere der Raumwinkel, unter dem das von der Leuchteinrichtung emittierte Licht gesehen werden kann, im Verhältnis zu der Radleitschiene der gattungsgemäßen DE 2012 103 410 U1 vergrößert und vorzugsweise erheblich vergrößert werden. Informationen, die optisch über die Radleitschiene vermittelt werden, können dadurch von einem Fahrzeugführer besser wahrgenommen werden. Dies ist vorteilhaft für die Nutzung der Fahrzeugwaschvorrichtung und erlaubt es vorzugsweise, deren Betriebssicherheit zu erhöhen, zum Beispiel bei der optischen Übermittlung von sicherheitsrelevanten Informationen über die Radleitschiene.

Das Material ist beispielsweise weiß-opak.

Günstigerweise sind beide Aufnahmekörperteile entlang der Längserstreckung zumindest abschnittsweise aus dem transparenten, milchigen Material gefertigt.

Günstig kann es insbesondere sein, wenn das erste Aufnahmekörperteil und/oder das zweite Aufnahmekörperteil entlang der gesamten Längserstreckung oder vollständig aus dem transparenten Material gefertigt sind. Dadurch kann vorteilhafterweise der Eindruck erweckt werden, dass die gesamte Radleitschiene, zumindest jedoch über die Länge der Leuchteinrichtung, selbstleuchtend ist.

Die Leuchteinrichtung ist in Längsrichtung der Radleitschiene beispielsweise kürzer als der mindestens eine Aufnahmekörper und endseitig vom ersten und/oder zweiten Aufnahmekörperteil überdeckt.

Das erste Aufnahmekörperteil und das zweite Aufnahmekörperteil sind vorzugsweise fügespaltlos aneinandergefügt, wobei es sich versteht, dass diese Aussage im Umfang der üblichen und nicht zu vermeidenden Toleranzen bei der Fertigung der Aufnahmekörperteile verstanden werden soll.

Beispielsweise weisen die Aufnahmekörperteile einander zugewandt jeweils planare Anlageflächen auf, über die die Aufnahmekörperteile aneinander anliegen.

Das erste Aufnahmekörperteil und/oder das zweite Aufnahmekörperteil sind bei einer bevorzugten Ausführungsform der Erfindung einstückig ausgestaltet. Die einstückige (monolithische) Ausgestaltung ermöglicht eine herstellungstechnisch einfache und kostengünstige Fertigung der Radleitschiene.

Das transparente Material ist beispielsweise ein Kunststoffmaterial, insbesondere PMMA, PE, PP oder PVC. In einer bevorzugten Ausführungsform hat sich eine Fertigung aus PMMA als vorteilhaft erwiesen.

Die Aufnahmekörperteile können auf unterschiedliche Weise gefertigt werden. Beispielsweise ist vorgesehen, dass die Aufnahmekörperteile Sägteile, Frästeile und/oder extrudierte Teile sind. Bei einer vorteilhaften Ausführungsform ist zum Beispiel vorgesehen, die Aufnahmekörperteile aus Blöcken eines Kunststoffmaterials zu sägen und/oder zu fräsen.

Vorgesehen sein kann, dass die Aufnahmekörperteile nach formgebender Bearbeitung geschliffen oder poliert werden.

Das erste Aufnahmekörperteil kann zum Beispiel ein Unterteil des Aufnahmekörpers sein, und das zweite Aufnahmekörperteil kann ein Oberteil des Aufnahmekörpers sein, das auf das Unterteil aufgesetzt ist. Der Aufnahmeraum ist bei dieser Ausführungsform zwischen dem Unterteil und dem Oberteil gebildet.

Beispielsweise übergreift das Oberteil die Leuchteinrichtung auf einander gegenüberliegenden Seiten mit jeweiligen Abschnitten und liegt über diese Abschnitte jeweils auf dem Unterteil auf.

Bei einer vorteilhaften Ausführungsform der Erfindung kann an einem Aufnahmekörperteil, insbesondere am ersten Aufnahmekörperteil, ein Vorsprung angeordnet sein und an dem anderen Aufnahmekörperteil, insbesondere an dem zweiten Aufnahmekörperteil, eine Aufnahme, wobei der Vorsprung in die Aufnahme eingreift und der Aufnahmeraum zwischen dem Vorsprung und einer Wandung der Aufnahme gebildet ist. Beispielsweise umfasst das Unterteil den Vorsprung und das Oberteil die Aufnahme.

Der Vorsprung ist beispielsweise leistenförmig ausgebildet, infolge der Längserstreckung des Aufnahmekörperteils.

Die Aufnahme ist zum Beispiel nutförmig ausgebildet, infolge der Längserstreckung des anderen Aufnahmekörperteils.

Die Leuchteinrichtung ist beispielsweise am Vorsprung festgelegt. Hierbei ist insbesondere eine Verklebung der Leuchteinrichtung mit dem Vorsprung denkbar.

Vorgesehen sein kann, dass der Aufnahmeraum zwischen der Leuchteinrichtung und der Wandung der Aufnahme luftgefüllt ist. Hierunter kann insbesondere verstanden werden, dass an der dem Vorsprung abgewandten Seite der Leuchteinrichtung ein luftgefüllter Raumbereich des Aufnahmeraums angeordnet ist. Der luftgefüllte Bereich ist beispielsweise mindestens so hoch (quer zur Längserstreckung) wie die Leuchteinrichtung, vorzugsweise mindestens zwei- bis dreimal so hoch.

Die Leuchteinrichtung ist oder umfasst beispielsweise ein(en) LED-Leuchtstreifen. Die Leuchteinrichtung ist vorzugsweise mehrfarbig ausgestaltet, wobei durch Aktivierung jeweils ausgewählter Leuchtelemente verschiedenartige Farben darstellbar sind.

Eine elektrische Anschlussleitung der Leuchteinrichtung ist beispielsweise durch eine Öffnung an einem der Aufnahmekörperteile hindurchgeführt, insbesondere an einem Unterteil des Aufnahmekörpers.

Die Leuchteinrichtung kann zum Beispiel staubgeschützt und spritzwassergeschützt gemäß IP65-Standard sein.

Im ersten Aufnahmekörperteil und im zweiten Aufnahmekörperteil sind vorzugsweise jeweils eine Mehrzahl von Öffnungen gebildet, wobei die Öffnungen am ersten Aufnahmekörperteil und am zweiten Aufnahmekörperteil miteinander fluchten und ein Verbindungselement in den fluchtenden Öffnungen angeordnet ist. Das Verbindungselement, beispielsweise ein Schraubelement, erlaubt beispielsweise die Verbindung der Aufnahmekörperteile miteinander.

Vorgesehen sein kann, dass das erste Aufnahmekörperteil und das zweite Aufnahmekörperteil ein Unterteil und ein Oberteil umfassen, wobei das Verbindungselement durch das Oberteil und das Unterteil hindurch zum Festlegen der Radleitschiene am Boden verläuft. Dies ermöglicht es, die Aufnahmekörperteile miteinander zu verbinden und zugleich die Radleitschiene am Boden festzulegen.

Die Öffnungen können beispielsweise an einer der Stellfläche abgewandten Seite des mindestens einen Aufnahmekörpers angeordnet sein. Die Ausbreitung des Lichtes in Richtung der Stellfläche wird dadurch nicht durch die Öffnungen oder das darin aufgenommene Verbindungselement behindert.

Der mindestens eine Aufnahmekörper weist beispielsweise an einer der Stellfläche zugewandten Seite eine Abschrägung von oben nach unten in Richtung auf die Stellfläche auf. Die Abschrägung dient beispielsweise dem Schutz der Radleitschiene bei Kontakt mit dem Fahrzeug.

Der mindestens eine Aufnahmekörper kann direkt oder indirekt auf dem Boden aufliegen.

Die Radleitschiene umfasst beispielsweise Aufstellelemente zum Aufstellen auf dem Boden, die entlang der Längserstreckung voneinander beabstandet sind, wobei Zwischenräume zwischen den jeweiligen Aufstellelementen gebildet sind. Durch die Zwischenräume hindurch kann bei Einsatz der Radleitschienen an der Fahrzeugwaschvorrichtung beispielsweise eine Reinigungsflüssigkeit abfließen, insbesondere Wasser.

Die Aufstellelemente sind zum Beispiel unterhalb des mindestens einen Aufnahmekörpers angeordnet und mit diesem verbunden, zum Beispiel durch Verklebung.

Aufstellelemente können eine Öffnung umfassen, durch die hindurch das oben erwähnte Verbindungselement hindurchgeführt ist.

Der Aufnahmekörper kann so bemessen sein, dass er sich entlang der gesamten Länge der Stellfläche erstreckt.

Bei einer bevorzugten Ausführungsform der Erfindung kann vorgesehen sein, dass die Radleitschiene mehrsegmentig ausgestaltet ist und entlang der Längserstreckung zwei oder mehr Aufnahmekörper mit einem (jeweiligen) ersten Aufnahmekörperteil und einem (jeweiligen) zweiten Aufnahmekörperteil umfasst.

Dies bietet zum Beispiel die Möglichkeit eines modularen Aufbaus der Radleitschiene. Je nach Länge der Stellfläche können mehr oder weniger Segmente der Radleitschiene vorgesehen sein. Die Segmente können entlang der Längserstreckung identische Abmessungen aufweisen oder unterschiedliche Abmessungen aufweisen. Die Unterteilung der Radleitschiene in eine Mehrzahl von Segmenten erleichtert beispielsweise die Fertigung der jeweiligen Aufnahmekörper. Auch der Transport der Radleitschiene durch Unterteilung in die Segmente wird erleichtert.

Die Aufnahmekörper oder deren Aufnahmekörperteile sind vorzugsweist spaltlos aneinandergefügt.

Vorgesehen sein kann zum Beispiel, dass ein Aufnahmekörperteil eines Aufnahmekörpers einen Absatz ausbildet, auf dem ein Aufnahmekörperteil des benachbarten Aufnahmekörpers mit einem Vorsprung aufliegt. Benachbarte Aufnahmekörper können dadurch im Bereich des Absatzes und des Vorsprungs abschnittsweise überlappen. Beispielsweise werden der Absatz und der Vorsprung jeweils von einem ein Oberteil bildenden Aufnahmekörperteil der Aufnahmekörper gebildet.

Am Vorsprung und am Absatz kann beispielsweise jeweils eine Öffnung gebildet sein, in denen ein Verbindungselement angeordnet ist. Dies erlaubt es zum Beispiel, die Aufnahmekörper über das Verbindungselement miteinander zu verbinden. Günstigerweise kann das Verbindungselement durch den Vorsprung und den Absatz hindurch mit dem Boden verbunden werden, wodurch die Aufnahmekörper aneinandergehalten sind und die Radleitschiene am Boden festgelegt ist.

Wie eingangs erwähnt, betrifft die vorliegende Erfindung auch eine Fahrzeugwaschvorrichtung. Die erfindungsgemäße, die eingangs genannte Aufgabe lösende Fahrzeugwaschvorrichtung umfasst mindestens ein Reinigungswerkzeug und weist eine befahrbare Stellfläche für das Kraftfahrzeug auf sowie mindestens eine Radleitschiene der vorstehend beschriebenen Art, die eine seitliche Begrenzung der Stellfläche ausbildet.

Die bereits im Zusammenhang mit der Erläuterung der erfindungsgemäßen Radleitschiene erwähnten Vorteile können bei der Fahrzeugwaschvorrichtung ebenfalls erzielt werden. Diesbezüglich kann auf die voranstehenden Ausführungen verwiesen werden.

Vorteilhafte Ausführungsformen der Fahrzeugwaschvorrichtung ergeben sich durch vorteilhafte Ausführungsformen der erfindungsgemäßen Radleitschiene. Auch diesbezüglich wird auf die voranstehenden Ausführungen verwiesen.

Die Fahrzeugwaschvorrichtung kann insbesondere eine Fahrzeugwaschanlage sein, die als Portalanlage ausgestaltet ist, bei der ein Waschportal relativ zu einem stationären Fahrzeug verfahren wird. Alternativ kann die Fahrzeugwaschanlage eine Waschstraße sein.

Denkbar ist, dass die Fahrzeugwaschvorrichtung zur manuellen Reinigung des Fahrzeugs ausgestaltet ist, beispielsweise bei einem Selbstbedienungs-(SB-)Waschplatz.

Wie eingangs ferner erwähnt, betrifft die vorliegende Erfindung auch ein Verfahren.

Ein erfindungsgemäßes, die eingangs genannte Aufgabe lösendes Verfahren zum Herstellen einer Radleitschiene, insbesondere der vorstehend beschriebenen Art, für eine von einem Kraftfahrzeug befahrbare Stellfläche umfasst:
- Bereitstellen eines ersten längserstreckten Aufnahmekörperteils und eines zweiten längserstreckten Aufnahmekörperteils, wobei zumindest ein Aufnahmekörperteil entlang der Längserstreckung zumindest abschnittsweise aus einem transparenten, milchigen Material gefertigt ist;
- Bereitstellen einer längserstreckten Leuchteinrichtung mit einer Mehrzahl von Leuchtelementen;
- Anordnen der Leuchteinrichtung an einem der Aufnahmekörperteile;
- Anordnen der Aufnahmekörperteile aneinander, so dass die Leuchteinrichtung in einem Aufnahmeraum aufgenommen ist, der zwischen den Aufnahmekörperteilen gebildet ist.

Die bereits im Zusammenhang mit der Erläuterung der erfindungsgemäßen Radleitschiene erwähnten Vorteile können unter Ausübung des Verfahrens erzielt werden. Vorteilhafte Ausführungsbeispiele des Verfahrens ergeben sich durch vorteilhafte Ausführungsformen der erfindungsgemäßen Radleitschiene. Auf die voranstehenden Ausführungen wird verwiesen.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung einer erfindungsgemäßen, als Fahrzeugwaschanlage ausgestalteten Fahrzeugwaschvorrichtung, umfassend zwei erfindungsgemäße Radleitschienen in bevorzugter Ausführungsform;
- Figur 2:: eine perspektivische Darstellung der Radleitschienen aus Figur 1;
- Figur 3:: eine vergrößerte perspektivische Darstellung einer der Radleitschienen in einer Explosionsansicht;
- Figur 4:: eine vergrößerte Teildarstellung der Radleitschiene aus Figur 3;
- Figur 5:: eine Schnittansicht längs der Ebene 5-5 in Figur 4;
- Figur 6:: eine vergrößerte Darstellung von Detail A in Figur 2; und
- Figur 7:: eine Darstellung entsprechend Figur 6 bei einer andersartigen Ausführungsform der erfindungsgemäßen Radleitschiene.

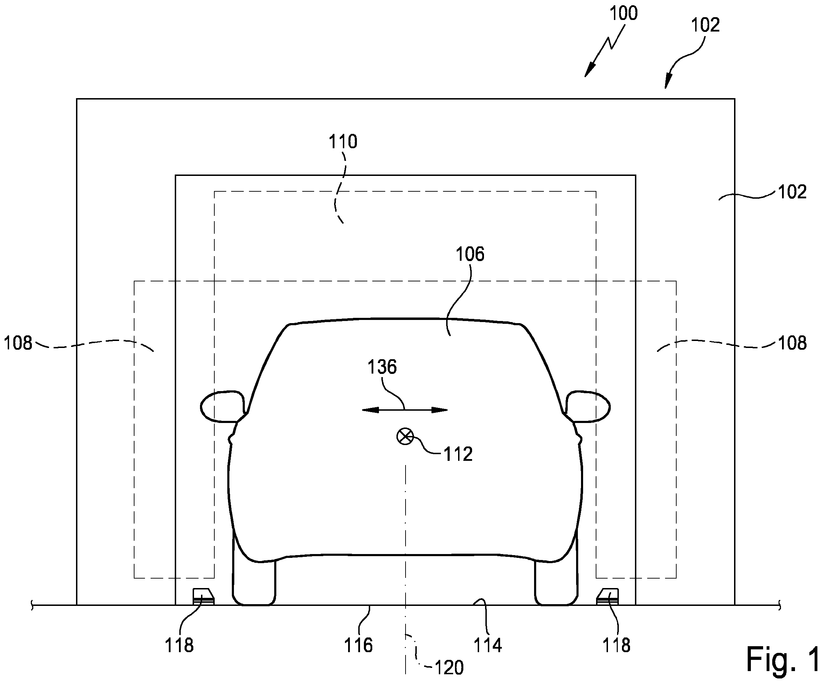

Figur 1 zeigt in einer Frontansicht schematisch eine insgesamt mit dem Bezugszeichen 100 belegte vorteilhafte Ausführungsform einer erfindungsgemäßen Fahrzeugwaschvorrichtung. Die Fahrzeugwaschvorrichtung 100 ist ausgestaltet als Fahrzeugwaschanlage 102, insbesondere als Portalwaschanlage. Die Fahrzeugwaschanlage 102 umfasst ein Waschportal 104 mit einer Mehrzahl von Reinigungswerkzeugen zum Reinigen eines Fahrzeugs 106. Als Reinigungswerkzeuge sind vorliegend schematisch Seitenwaschbürsten 108 und eine Dachbürste 110 zum Abreinigen von Seitenflächen bzw. obenliegenden Flächen des Fahrzeugs 106 dargestellt.

Das Waschportal 104 kann in an sich bekannter Weise in einer Längsrichtung 112 der Fahrzeugwaschanlage 102 verschoben werden, wobei die Reinigungswerkzeuge dieses abreinigen. Das Fahrzeug 106 ist auf einer Stellfläche 114 positioniert, die durch einen Boden 116 gebildet wird. Auf dem Boden 116 ist das Waschportal 104 verfahrbar.

Beispielsweise um einem Benutzer die Ausrichtung des Fahrzeugs 106 relativ zum Waschportal 104 und insbesondere zur Stellfläche 114 zu erleichtern, umfasst die Fahrzeugwaschanlage 102 Radleitschienen 118, bei denen es sich vorliegend um bevorzugte Ausführungsformen der erfindungsgemäßen Radleitschiene handelt.

Die Radleitschienen 118 bilden quer zur Längsrichtung 112 jeweils eine seitliche Begrenzung der Stellfläche 114. Ist das Fahrzeug 106 zwischen den Radleitschienen 118 positioniert, wird sichergestellt, dass das Fahrzeug 106 nicht durch das sich bewegende Waschportal 104 beschädigt wird.

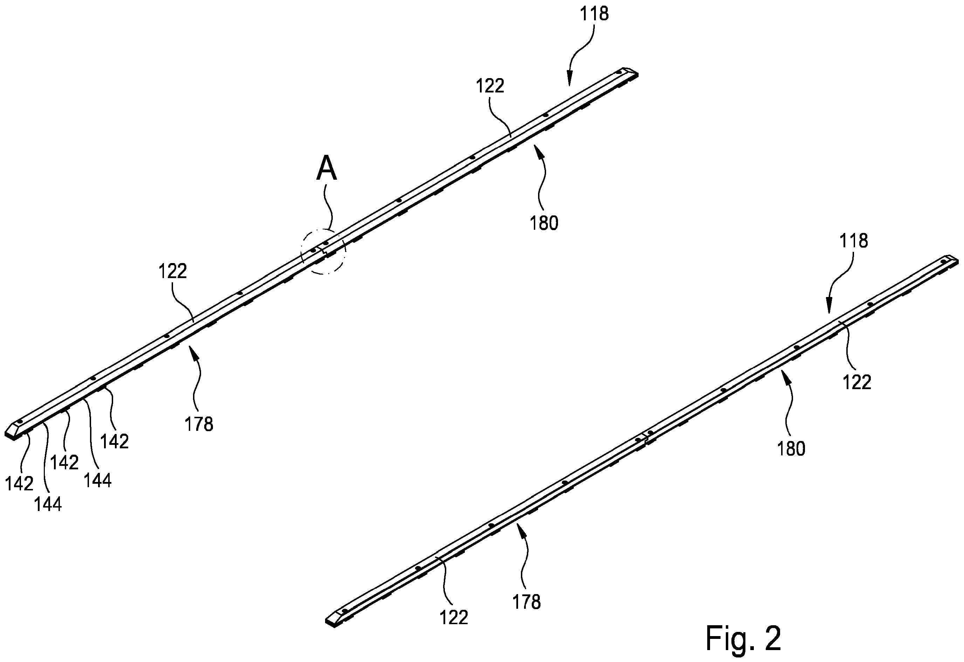

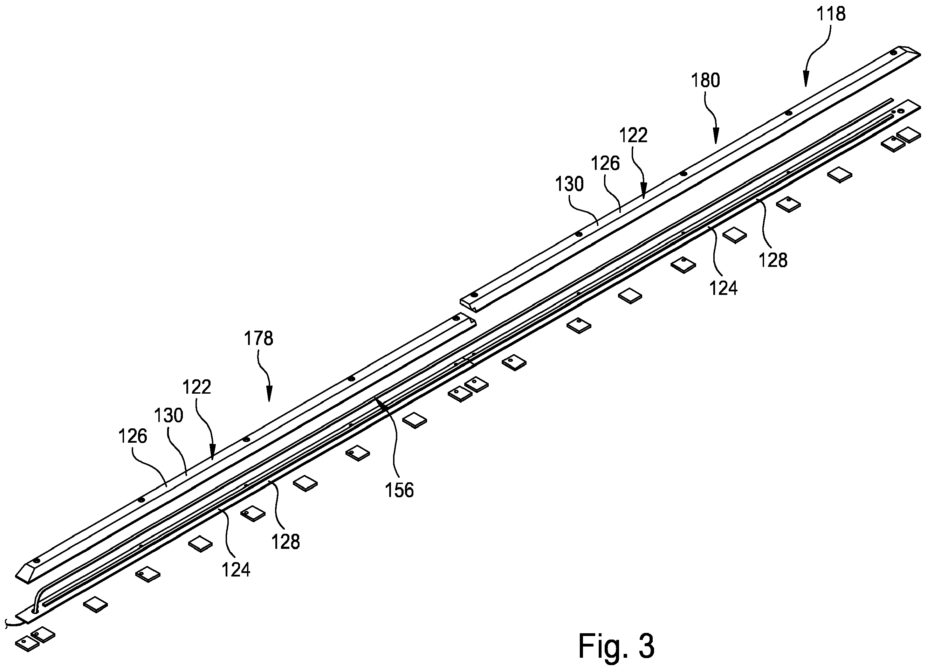

Die Radleitschienen 118 sind vorliegend symmetrisch zueinander ausgestaltet bezüglich einer Mittellängsebene 120 der Fahrzeugwaschanlage 102. Nachfolgend wird aus diesem Grund lediglich auf eine Radleitschiene 118 eingegangen, unter Verweis insbesondere auf die Figuren 2 bis 7. Hierbei handelt es sich um die in der Einfahrrichtung für das Fahrzeug 106 links angeordnete und links in Figur 1 dargestellte Radleitschiene 118. Figur 2 zeigt auch die rechte Radleitschiene. Die nachfolgenden Ausführungen in Bezug auf die linke Radleitschiene gelten in entsprechender Weise auch für die rechte Radleitschiene 118.

Wie aus der Zeichnung deutlich wird, weist die Radleitschiene 118 insgesamt eine Längserstreckung auf, vorliegend parallel zur Längsrichtung 112, die auch eine Längsrichtung der Radleitschiene 118 ist. Die Radleitschiene 118 umfasst mindestens einen Aufnahmekörper 122, der längserstreckt ausgestaltet ist. Im vorliegenden Ausführungsbeispiel ist die Radleitschiene 118 mehrsegmentig ausgestaltet mit zwei in Längserstreckung nebeneinander angeordneten Aufnahmekörpern 122. Zunächst wird auf die Ausgestaltung eines ersten der beiden Aufnahmekörper 122 eingegangen.

Der (erste) Aufnahmekörper 122 weist ein erstes Aufnahmekörperteil 124 und ein zweites Aufnahmekörperteil 126 auf. Vorliegend ist das erste Aufnahmekörperteil 124 ein Unterteil 128 des Aufnahmekörpers 122. Das zweite Aufnahmekörperteil 126 ist ein Oberteil 130 des Aufnahmekörpers 122.

Das Unterteil 128 und das Oberteil 130 sind beispielsweise jeweils aus einem Kunststoffmaterial gefertigt. Hierzu kommt zum Beispiel PMMA zum Einsatz.

Mindestens ein Aufnahmekörperteil 124, 126 ist entlang der Längserstreckung des Aufnahmekörpers 122 zumindest abschnittsweise aus einem transparenten milchigen Material gefertigt.

Das Material ist beispielsweise weiß-opak.

Vorliegend ist insbesondere vorgesehen, dass beide Aufnahmekörperteile 124, 126 aus dem transparenten und milchigen Material gefertigt sind. Dieses Material ist durchlässig für Licht und vorzugsweise farbneutral. Das Licht wird aufgrund der Beschaffenheit des jeweiligen Aufnahmekörperteils 124, 126 gestreut. Ein beleuchtetes Aufnahmekörperteil 124, 126 kann dadurch vorzugsweise den Eindruck erwecken, als wäre es selbstleuchtend, so dass der Eindruck eines flächig leuchtenden Aufnahmekörpers 122 entstehen kann.

Das Unterteil 128 ist vorliegend streifenförmig ausgestaltet mit einem planaren Abschnitt 132. Das Unterteil 128 umfasst einem vom Abschnitt 132 abstehenden Vorsprung 134, der vorliegend leistenförmig ausgestaltet ist.

Bezogen auf eine Querrichtung 136 quer zur Längsrichtung 112 ist der Vorsprung 134 im Wesentlichen mittig am Unterteil 128 gebildet.

An einem Endbereich 138 ist am Abschnitt 132 eine Durchgangsöffnung 140 gebildet.

Die Radleitschiene 118 umfasst zum Aufstellen auf dem Boden 116 Aufstellelemente 142. Vorliegend sind eine Mehrzahl von in der Längsrichtung 112 voneinander beabstandeten Aufstellelementen 142 vorgesehen. Zwischen jeweiligen Aufstellelementen 142 ist ein Zwischenraum 144 gebildet.

Reinigungsflüssigkeit, die beim Betrieb der Fahrzeugwaschanlage 102 eingesetzt wird, kann über die Zwischenräume 144 abfließen.

Die Aufstellelemente 142 sind beispielsweise plattenförmig ausgestaltet.

Die Aufstellelemente 142 sind bei der vorliegenden Ausführungsform mit dem Unterteil 128 verbunden, beispielsweise durch Verklebung. Bei einer andersartigen Ausführungsform kann vorgesehen sein, dass das Unterteil 128 selbst Aufstellelemente 142 umfasst oder ausbildet.

Die Aufnahmekörperteile 124, 126 sind vorliegend beispielsweise Sägteile, die aus einem blockförmigen Rohling von Kunststoffmaterial gesägt sind. Zugleich können es Frästeile es, bei denen die Konturen der Aufnahmekörperteile 124, 126 durch fräsende Bearbeitung gefertigt werden.

Das Oberteil 130 überdeckt das Unterteil 128. Hierbei umfasst das Oberteil 130 zwei einander bezüglich des Vorsprungs 134 gegenüberliegende Abschnitte 146, 148. Die Abschnitte 146, 148 sind planar ausgestaltet, so dass das Oberteil 130 flächig auf dem Abschnitt 132 aufliegen kann. Dadurch sind die Aufnahmekörperteile 124, 126 fügespaltlos aneinandergefügt.

Das Oberteil 130 umfasst eine Aufnahme 150. Die Aufnahme 150 ist nutförmig und verläuft in Längsrichtung 112 des Oberteils 130.

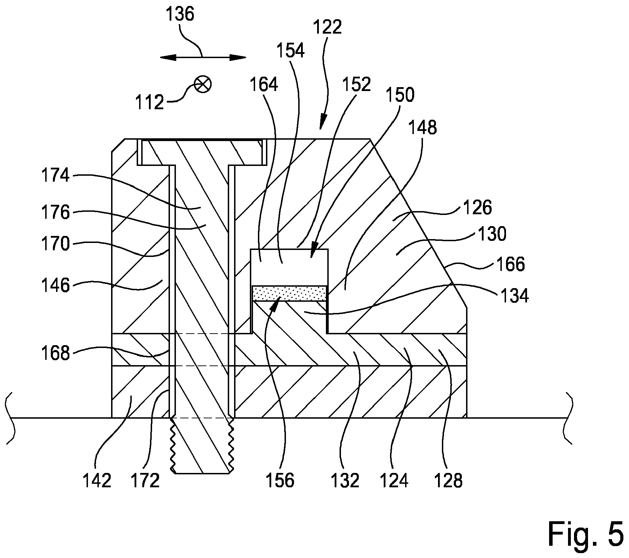

Die Aufnahme 150 ist zwischen den Abschnitten 146, 148 gebildet und so bemessen, dass der Vorsprung 134 formschlüssig eingreifen kann (Figur 5).

Zwischen dem Vorsprung 134 und einer Wandung 152 der Aufnahme 150 ist ein Aufnahmeraum 154 des Aufnahmekörpers 122 gebildet.

Die Radleitschiene 118 umfasst eine Leuchteinrichtung 156. Vorliegend ist beiden Aufnahmekörpern 122 eine gemeinsame Leuchteinrichtung 156 zugeordnet. Bei einer andersartigen Ausführungsform können gesonderte Leuchteinrichtungen 156 vorgesehen sein.

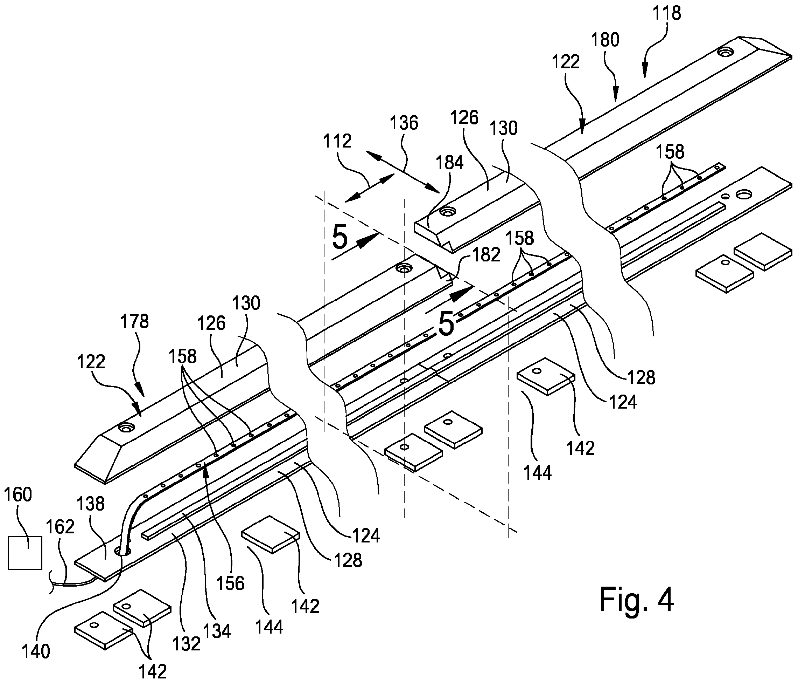

Die Leuchteinrichtung 156 ist ausgestaltet als LED-Leuchtstreifen, der längserstreckt ausgebildet ist und eine Mehrzahl von im Abstand zueinander angeordneten Leuchtelementen 158 umfasst (Figur 4). Dabei ist die Leuchteinrichtung 156 so beschaffen, dass das emittierte Licht abhängig davon, welche Leuchtelemente 158 aktiviert sind, unterschiedliche Farben emittieren kann. Zur Steuerung der Lichtfarbe kann beispielsweise eine Steuereinrichtung 160 vorgesehen sein.

Eine elektrische Anschlussleitung 162 ist durch die Durchgangsöffnung 140 hindurchgeführt und beispielsweise im Boden 116 verlegt.

Die Leuchteinrichtung 156 ist im Aufnahmeraum 154 angeordnet. Vorgesehen ist vorliegend insbesondere, dass die Leuchteinrichtung 156 auf dem Vorsprung 134 aufliegt und vorzugsweise mit diesem verklebt ist. Zu diesem Zweck kann die Leuchteinrichtung 156 selbstklebend sein.

Zwischen der Leuchteinrichtung 156 und der Wandung 152 ist der Aufnahmeraum 154 in einem Raumbereich 164 luftgefüllt. Das von der Leuchteinrichtung 156 nach oben emittierte Licht durchläuft dementsprechend vor Eintritt in das Oberteil 130 zunächst eine freie Wegstrecke innerhalb des Aufnahmeraums 154 (Figur 5).

Bei einem Herstellungsverfahren für die Radleitschiene 118 werden das Unterteil 128 und das Oberteil 130 bereitgestellt. Die Leuchteinrichtung 156 wird bereitgestellt und am Vorsprung 134 angeordnet, vorzugsweise mit diesem verklebt. Anschließend wird das Oberteil 130 am Unterteil 128 angeordnet und vorzugsweise fügespaltlos an dieses angefügt, wobei die Abschnitte 146, 148 auf dem Abschnitt 132 aufliegen.

Bei aktivierter Leuchteinrichtung 156 dringt das Licht in die Aufnahmekörperteile 124, 126 ein und wird darin gestreut. Dies führt dazu, dass der Aufnahmekörper 122 gewissermaßen als selbstleuchtend angesehen werden kann. Das emittierte Licht kann vom Fahrzeugführer unter einem großen Raumwinkel wahrgenommen werden.

Abhängig davon, welches Licht von der Leuchteinrichtung 156 emittiert wird, können dem Fahrzeugführer beispielsweise Hinweise zum Führen des Fahrzeugs 106 beim Befahren der Stellfläche 114 übermittelt werden. Darüber hinaus können weitere Informationen optisch signalisiert werden, beispielsweise bei korrekter oder fehlerhafter Positionierung des Fahrzeugs 106. Weitere denkbare Informationen beziehen sich beispielsweise auf den Ablauf eines Waschprogramms der Fahrzeugwaschanlage 102. Sicherheitsrelevante Informationen können ebenso optisch signalisiert werden.

Die Radleitschiene 118 weist der Stellfläche 114 zugewandt eine Abschrägung 166 auf. Die Abschrägung 166 verläuft von oben nach unten in Richtung auf die Stellfläche 114. Diese Gestalt der Radleitschiene 118 hat das Ziel, deren Beschädigung bei Kontakt mit dem Fahrzeug 106 zu vermeiden.

Wie insbesondere aus den Figuren 4 und 5 hervorgeht, weisen das Unterteil 128 und das Oberteil 130 jeweils eine Mehrzahl von Öffnungen 168 bzw. 170 auf. Die Öffnungen 168, 170 sind vorliegend an der der Stellfläche 114 abgewandten Seite des Aufnahmekörpers 122 angeordnet.

In entsprechender Weise weisen einige der Aufstellelemente 142 Öffnungen 172 auf.

Es fluchtet jeweils eine Öffnung 168 mit einer Öffnung 170 und wiederum mit einer Öffnung 172 (Figur 5). Die Öffnungen 168, 170, 172 sind Durchgangsöffnungen zum Hindurchführen eines Verbindungselementes 174.

Vorliegend ist das Verbindungselement 174 ausgestaltet als Schraubelement 176. Das Schraubelement 176 ist von oben durch die Öffnungen 168, 170, 172 durchgeführt und mit dem Boden 116 verschraubt. Dadurch werden die Aufnahmekörperteile 124, 126 miteinander verbunden. Ferner werden die Aufstellelemente 142 fixiert. Der Aufnahmekörper 122 ist am Boden 116 festgelegt.

Einige Aufstellelemente 142 umfassen vorliegend keine Öffnung 172, da bezogen auf die Längsrichtung 112 an deren Position keine Öffnungen 168, 170 der Aufnahmekörperteile 124, 126 vorhanden sind. Zur Vereinfachung der Konstruktion kann indessen vorgesehen sein, dass alle Aufstellelemente 142 Öffnungen 172 umfassen.

Wie bereits erwähnt, ist die Radleitschiene 118 vorliegend mehrsegmentig ausgestaltet. Dabei sind insbesondere zwei Segmente 178, 180 vorgesehen, die in der Längsrichtung 112 nebeneinander angeordnet sind. Jedes Segment 178, 180 umfasst einen Aufnahmekörper 122. Zusätzlich zu dem beschriebenen ersten Aufnahmekörper 122 des ersten Segments 178 ist ein zweiter Aufnahmekörper 122 des zweiten Segments 180 vorhanden.

Die Nutzung mehrerer Segmente 178, 180 ermöglicht einen modularen Aufbau der Radleitschiene 118. Dies erweist sich als vorteilhaft, um Herstellungskosten gering zu halten und den Transport der Radleitschiene 118 zu erleichtern. Darüber hinaus kann durch den modularen Aufbau flexibel auf unterschiedliche Anforderungen in Bezug auf Stellflächen 114 unterschiedlicher Länge reagiert werden. Abhängig davon, wie lang die Stellfläche 114 ist, sind beispielsweise Radleitschienen 118 vordefinierter Länge bereitzustellen. Dies lässt sich dadurch umsetzen, dass nur ein Segment mit einem Aufnahmekörper 122 oder zwei oder mehr Segmente 178, 180 mit jeweiligem Aufnahmekörper 122 eingesetzt werden.

Denkbar ist es hierbei, dass die Segmente 178, 180 (sowie gegebenenfalls weitere Segmente) identische Längen aufweisen oder dass unterschiedliche Längen vorgesehen sind.

Im vorliegenden Beispiel sind die Segmente 178, 180 beispielsweise gleichlang mit einer jeweiligen Länge von ungefähr 2 m. Es versteht sich, dass diese Abmessung lediglich beispielhaft ist.

Im Rahmen der vorliegenden Erfindung ist es dementsprechend denkbar, dass ein Vorrat von Segmenten vorgehalten wird, wobei Segmente gleicher Abmessungen und/oder verschiedenartiger Abmessungen vorhanden sind, aus denen sich jeweils eine Radleitschiene 118 gewünschter Länge bilden lässt.

Zur Bildung der Radleitschiene 118 ist mindestens eine Leuchteinrichtung 156 vorgesehen. Diese erstreckt sich vorliegend über die Länge beider Segmente 178, 180. Bei einer andersartigen Ausführungsform ist an einem jeweiligen Segment 178, 180 eine gesonderte Leuchteinrichtung 156 vorgesehen. Alternativ ist denkbar, dass zwei oder mehr Segmente eine gemeinsame Leuchteinrichtung 156 aufweisen.

Unter "gemeinsame Leuchteinrichtung 156" kann vorliegend auch verstanden werden, dass die Leuchteinrichtung 156 einen Grundabschnitt und einen oder mehrere Verlängerungsabschnitt(e) aufweisen kann, die an den Grundabschnitt angeschlossen werden, wie dies bei LED-Leuchtstreifen bekannt ist.

Umgekehrt kann vorgesehen sein, dass eine Leuchteinrichtung 156 vorgesehen ist, die eine größere Erstreckung aufweist, als für die Radleitschiene 118 erforderlich ist. Die Leuchteinrichtung 156 kann zur Anpassung an die Länge des einen Segmentes oder der Segmente beispielsweise gekürzt werden.

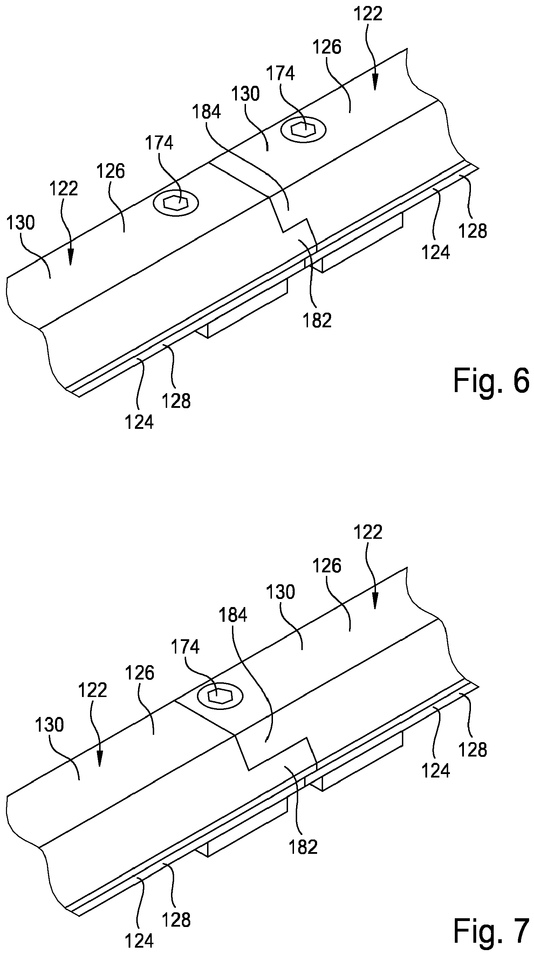

Der erste Aufnahmekörper 122 und der zweite Aufnahmekörper 122 sind bei der Radleitschiene 118 aneinandergefügt, wie dies insbesondere aus den Figuren 4 und 6 ersichtlich ist. Hierbei umfasst das Oberteil 130 des ersten Aufnahmekörpers 122 (links in Figur 6 dargestellt) einen Absatz 182. Das Oberteil 130 des zweiten Aufnahmekörpers 122 (rechts in Figur 6 dargestellt) umfasst einen Vorsprung 184. Der Vorsprung 184 liegt auf dem Absatz 182 fügespaltlos auf. Darüber hinaus sind die jeweiligen Stirnseiten der Aufnahmekörperteile 124 und die Stirnseiten der Aufnahmekörperteile 126 beider Aufnahmekörper 122 aneinandergefügt.

Figur 7 zeigt eine andersartige vorteilhafte Fügestelle der Aufnahmekörper 122. Hierbei ist abweichend von der Konstruktion gemäß Figur 6 vorgesehen, dass im Bereich des Absatzes 182 und des Vorsprungs 184 die Öffnungen 168, 170 der Aufnahmekörper 122 vorgesehen sind. Günstigerweise ist in diesem Bereich auch ein Aufstellelement 142 mit Öffnung 172 vorgesehen. Das Verbindungselement 174 ist durch den Vorsprung 184 und den Absatz 182 hindurchgeführt, so dass die Aufnahmekörper 122 über ein gemeinsames Verbindungselement 174 am Boden 116 festgelegt werden können.

### Bezugszeichenliste

- 100: Fahrzeugwaschvorrichtung
- 102: Fahrzeugwaschanlage
- 104: Waschportal
- 106: Fahrzeug
- 108: Seitenwaschbürste
- 110: Dachbürste
- 112: Längsrichtung
- 114: Stellfläche
- 116: Boden
- 118: Radleitschiene
- 120: Mittellängsebene
- 122: Aufnahmekörper
- 124: erstes Aufnahmekörperteil
- 126: zweites Aufnahmekörperteil
- 128: Unterteil
- 130: Oberteil
- 132, 146, 148: Abschnitt
- 134, 184: Vorsprung
- 136: Querrichtung
- 138: Endbereich
- 140: Durchgangsöffnung
- 142: Aufstellelement
- 144: Zwischenraum
- 150: Aufnahme
- 152: Wandung
- 154: Aufnahmeraum
- 156: Leuchteinrichtung
- 158: Leuchtelement
- 160: Steuereinrichtung
- 162: Anschlussleitung
- 164: Raumbereich
- 166: Abschrägung
- 168, 170, 172: Öffnung
- 174: Verbindungselement
- 176: Schraubelement
- 178, 180: Segment
- 182: Absatz

## Patentansprüche

1. Radleitschiene (118) für eine von einem Kraftfahrzeug (106) befahrbare Stellfläche (114), insbesondere einer Fahrzeugwaschvorrichtung (100), wobei die Radleitschiene (118) mindestens einen eine Längserstreckung aufweisenden Aufnahmekörper (122) und eine eine Längserstreckung aufweisende und am mindestens einen Aufnahmekörper (122) angeordnete Leuchteinrichtung (156) mit einer Mehrzahl von Leuchtelementen (158) umfasst,
**dadurch gekennzeichnet, dass**
der mindestens eine Aufnahmekörper (122) ein erstes Aufnahmekörperteil (124) und ein zweites Aufnahmekörperteil (126) umfasst, die zwischen sich einen Aufnahmeraum (154) bilden, in dem die Leuchteinrichtung (156) aufgenommen ist, vorzugsweise verbunden mit mindestens einem der Aufnahmekörperteile (124, 126), wobei das erste Aufnahmekörperteil (124) und/oder das zweite Aufnahmekörperteil (126) entlang der Längserstreckung zumindest abschnittsweise aus einem transparenten milchigen Material gefertigt ist.

2. Radleitschiene (118) nach Anspruch 1,
**dadurch gekennzeichnet, dass**
das erste Aufnahmekörperteil (124) und/oder das zweite Aufnahmekörperteil (126) entlang der gesamten Längserstreckung oder vollständig aus dem transparenten Material gefertigt ist.

3. Radleitschiene (118) nach Anspruch 1 oder 2,
**dadurch gekennzeichnet, dass**
das erste Aufnahmekörperteil (124) und das zweite Aufnahmekörperteil (126) fügespaltlos aneinandergefügt sind.

4. Radleitschiene (118) nach einem der voranstehenden Ansprüche,
**dadurch gekennzeichnet, dass**
zumindest eines der Folgenden gilt:
- das erste Aufnahmekörperteil (124) und/oder das zweite Aufnahmekörperteil (126) ist einstückig ausgestaltet;
- das transparente Material ist ein Kunststoffmaterial, insbesondere PMMA, PE, PP oder PVC;
- die Aufnahmekörperteile (124, 126) sind Sägteile, Frästeile und/oder extrudierte Teile.

5. Radleitschiene (118) nach einem der voranstehenden Ansprüche,
**dadurch gekennzeichnet, dass**
das erste Aufnahmekörperteil (124) ein Unterteil (128) des mindestens einen Aufnahmekörpers (122) ist und dass das zweite Aufnahmekörperteil (126) ein Oberteil (130) des Aufnahmekörpers (122) ist, das auf das Unterteil (128) aufgesetzt ist.

6. Radleitschiene (118) nach einem der voranstehenden Ansprüche,
**dadurch gekennzeichnet, dass**
an einem Aufnahmekörperteil (124, 126), insbesondere am ersten Aufnahmekörperteil (124), ein Vorsprung (134) angeordnet ist und an dem anderen Aufnahmekörperteil (124, 126), insbesondere an dem zweiten Aufnahmekörperteil (126), eine Aufnahme (150), wobei der Vorsprung (134) in die Aufnahme (150) eingreift und der Aufnahmeraum (154) zwischen dem Vorsprung (134) und einer Wandung (152) der Aufnahme (150) gebildet ist.

7. Radleitschiene (118) nach Anspruch 6,
**dadurch gekennzeichnet, dass**
die Leuchteinrichtung (156) am Vorsprung (134) festgelegt ist, insbesondere durch Verklebung, und/oder dass der Aufnahmeraum (154) zwischen der Leuchteinrichtung (156) und der Wandung (152) luftgefüllt ist.

8. Radleitschiene (118) nach einem der voranstehenden Ansprüche,
**dadurch gekennzeichnet, dass**
die Leuchteinrichtung (156) ein(en) LED-Leuchtstreifen ist oder umfasst und/oder dass eine elektrische Anschlussleitung (162) der Leuchteinrichtung (156) durch eine Öffnung (140) an einem der Aufnahmekörperteile (124, 126) hindurchgeführt ist.

9. Radleitschiene (118) nach einem der voranstehenden Ansprüche,
**dadurch gekennzeichnet, dass**
im ersten Aufnahmekörperteil (124) und im zweiten Aufnahmekörperteil (126) jeweils eine Mehrzahl von Öffnungen (168, 170) gebildet sind, wobei die Öffnungen (168, 170) am ersten Aufnahmekörperteil (124) und am zweiten Aufnahmekörperteil (126) miteinander fluchten und ein Verbildungselement (174) in den fluchtenden Öffnungen (168, 170) angeordnet ist.

10. Radleitschiene (118) nach Anspruch 9,
**dadurch gekennzeichnet, dass**
das erste Aufnahmekörperteil (124) und das zweite Aufnahmekörperteil (126) ein Unterteil (128) und ein Oberteil (130) umfassen, wobei das Verbindungselement (174) durch das Oberteil (130) und das Unterteil (128) hindurch zum Festlegen der Radleitschiene (118) am Boden (116) verläuft, und/oder dass die Öffnungen (168, 170) an einer der Stellfläche (114) abgewandten Seite des mindestens einen Aufnahmekörpers (122) angeordnet sind.

11. Radleitschiene (118) nach einem der voranstehenden Ansprüche,
**dadurch gekennzeichnet, dass**
der mindestens eine Aufnahmekörper (122) an einer der Stellfläche (114) zugewandten Seite eine Abschrägung (166) von oben nach unten in Richtung auf die Stellfläche (114) aufweist.

12. Radleitschiene (118) nach einem der voranstehenden Ansprüche,
**dadurch gekennzeichnet, dass**
die Radleitschiene (118) Aufstellelemente (142) zum Aufstellen auf dem Boden (116) umfasst, die entlang der Längserstreckung voneinander beabstandet sind, wobei Zwischenräume (144) zwischen den jeweiligen Aufstellelementen (142) gebildet sind.

13. Radleitschiene (118) nach einem der voranstehenden Ansprüche,
**dadurch gekennzeichnet, dass**
die Radleitschiene (118) mehrsegmentig ausgestaltet ist und entlang der Längserstreckung zwei oder mehr Aufnahmekörper (122) mit einem ersten Aufnahmekörperteil (124) und einem zweiten Aufnahmekörperteil (126) umfasst, wobei die Aufnahmekörper (122) oder deren Aufnahmekörperteile (124, 126) vorzugsweise spaltlos aneinandergefügt sind.

14. Radleitschiene (118) nach Anspruch 13,
**dadurch gekennzeichnet, dass**
ein Aufnahmekörperteil (124, 126) eines Aufnahmekörpers (122) einen Absatz (182) ausbildet, auf dem ein Aufnahmekörperteil (124, 126) des benachbarten Aufnahmekörpers (122) mit einem Vorsprung (184) aufliegt, wobei insbesondere am Vorsprung (184) und am Absatz (182) eine jeweilige Öffnung (170) gebildet sind, in denen ein Verbindungselement (174) angeordnet ist.

15. Fahrzeugwaschvorrichtung (100) mit mindestens einem Reinigungswerkzeug, insbesondere Fahrzeugwaschanlage (102), die eine befahrbare Stellfläche (114) für das Kraftfahrzeug (106) aufweist und mindestens eine Radleitschiene (118) nach einem der voranstehenden Ansprüche umfasst, die eine seitliche Begrenzung der Stellfläche (114) ausbildet.

16. Verfahren zum Herstellen einer Radleitschiene (118), insbesondere nach einem der Ansprüche 1 bis 14, für eine von einem Kraftfahrzeug (106) befahrbare Stellfläche (114), umfassend:
- Bereitstellen eines ersten längserstreckten Aufnahmekörperteils (124) und eines zweiten längserstreckten Aufnahmekörperteils (126), wobei zumindest ein Aufnahmekörperteil (124, 126) entlang der Längserstreckung zumindest abschnittsweise aus einem transparenten milchigen Material gefertigt ist;
- Bereitstellen einer längserstreckten Leuchteinrichtung (156) mit einer Mehrzahl von Leuchtelementen (158);
- Anordnen der Leuchteinrichtung (156) an einem der Aufnahmekörperteile (124, 126);
- Anordnen der Aufnahmekörperteile (124, 126) aneinander, so dass die Leuchteinrichtung (156) in einem Aufnahmeraum (154) aufgenommen ist, der zwischen den Aufnahmekörperteilen (124, 126) gebildet ist.
